# EUROPÄISCHE PATENTSCHRIFT

(11) **EP 1 545 919 B1**
(45) Veröffentlichungstag und Bekanntmachung des Hinweises auf die Patenterteilung: **15.03.2006**
(21) Anmeldenummer: 03776857.9
(22) Anmeldetag: 29.08.2003
(51) Int. Cl.: B60J 5/04

(54) **KRAFTFAHRZEUGKAROSSERIE UND KRAFTFAHRZEUG**
MOTOR VEHICLE BODY AND MOTOR VEHICLE
CARROSSERIE DE VEHICULE AUTOMOBILE ET VEHICULE AUTOMOBILE

(30) Priorität: 21.09.2002 DE 10243898
(43) Veröffentlichungstag der Anmeldung: 29.06.2005
(73) Patentinhaber: DaimlerChrysler AG, 70567 Stuttgart (DE)
(72) Erfinder: KRISTL, Rainer, 73249 Wernau (DE)
(86) Internationale Anmeldenummer: PCT/EP2003/009608
(87) Internationale Veröffentlichungsnummer: WO 2004/028884

(56) Entgegenhaltungen:
- FR-A- 2 842 143
- US-A- 1 639 037
- US-A- 1 869 274
- US-A- 2 212 674
- US-A- 5 367 828

## Beschreibung

Die Erfindung betrifft eine Kraftfahrzeugkarosserie gemäß dem Oberbegriff des Anspruchs 1. Eine derartige Kraftfahrzeugkarosserie ist zum Beispiel aus der US 5 367 828 A bekannt. Die Erfindung betrifft auch ein Kraftfahrzeug mit einer erfindungsgemäßen Kraftfahrzeugkarosserie.

Aus der deutschen Patentschrift 464 139 ist ein Kraftfahrzeug mit einer Kraftfahrzeugkarosserie mit zwei an einer Fahrzeugseite angeordneten Türen und einer lösbaren Karosserie-B-Säule bekannt. Die Karosserie-B-Säule ist in einer karosseriefesten Position an der Fahrzeugseite zwischen den beiden Türen angeordnet. Um eine Tragbahre in dem Innenraum des Fahrzeugs einladen zu können, ist die Karosserie-B-Säule an der hinteren der beiden Türen befestigt. Die B-Säule kann oben und unten mit Riegeln versehen sein, die in den Dach- und Grundrahmen des Wagenkastens eingerückt werden. Die vordere Türe ist an einer A-Säule angeschlagen und öffnet entgegen der normalen Vorwärts-Fahrtrichtung. Die hintere der beiden Türen, an der die B-Säule befestigt ist, ist an einer C-Säule angeschlagen und öffnet mit der Fahrtrichtung.

Aus der US-Patentschrift 2,212,674 ist eine lösbare Karosserie-B-Säule bekannt. Die B-Säule wird in einen Fahrzeugboden mittels eines Hakens eingehängt und am Dachrahmen mittels eines Rasthebels befestigt.

Aus der deutschen Offenlegungsschrift DE 38 10 762 A1 ist eine Kraftfahrzeugkarosserie bekannt, bei der eine B-Säule in eine hintere, entgegen der Fahrtrichtung öffnende Tür integriert ist. Die in die hintere Tür integrierte B-Säule umfasst Verriegelungsvorrichtungen, beispielsweise Bolzen, die mit einem Dachrahmen und einem Bodenrahmen zusammenwirken können.

Mit der Erfindung soll eine flexible Kraftfahrzeugkarosserie geschaffen werden, die den Fahrzeuginsassen einerseits Schutz bietet und andererseits auch mit sperrigen Gegenständen leicht zu beladen ist.

Erfindungsgemäß ist hierzu eine Kraftfahrzeugkarosserie vorgesehen, die die Merkmale des Anspruchs 1 aufweist.

Auf diese Weise ist das Öffnen der Türen flexibel gestaltet und die erste Bewegungsbahn kann beispielsweise für eine normale Öffnung entgegen der Vorwärts-Fahrtrichtung vorgesehen sein. Dadurch werden im Fahrbetrieb die bekannten Nachteile von in Fahrtrichtung öffnenden Türen vermieden. Die zweite Bewegungsbahn kann für eine maximal mögliche Türöffnung ausgelegt sein, um sperrige Güter unter Entfernung der B-Säule einladen zu können. Beispielsweise gibt die erste Bewegungsbahn ein konventionelles Schwenken der Türe vor und die zweite Bewegungsbahn kann ein Schwenken oder auch Verschieben, gegebenenfalls parallelogrammartig und gemeinsam mit der B-Säule, bewirken.

Ein normales Öffnen der Türe entgegen der Fahrtrichtung wird erreicht und gegenüber einem konventionellen, modernen Fahrzeug ist keine Änderung des Öffnungsvorgangs im Normalbetrieb erforderlich.

Die B-Säule versteift dabei die Kraftfahrzeugkarosserie, so dass zum einen die fehlende Struktursteifigkeit und Dichtungsproblematik B-säulenloser Fahrzeuge vermieden wird und zum anderen ein Aufprallschutz gegeben sowie eine problemlose Sicherheitsgurtbefestigung an der B-Säule möglich ist.

Die zweiten Anlenkmittel für die alternative, zweite Bewegungsbahn zum Öffnen der Türe im Sinne eines leichten Einladens sperriger Güter können beispielsweise im hinteren Türrahmenbereich oder auch am Dachrahmen vorgesehen sein. Die B-Säule kann beispielsweise entfernt werden oder zusammen mit der ersten Türe verschwenkt werden. Als zweite Anlenkmittel könnten beispielsweise Mehrgelenkscharniere für mehr Freiheiten bei der Wahl der Bewegungsbahn verwendet werden.

In Weiterbildung der Erfindung sind die ersten Anlenkmittel als wenigstens ein Türscharnier ausgebildet, das die erste Türe mit der B-Säule verbindet.

Auf diese Weise ist gegenüber einem konventionellen Fahrzeug keine Änderung der Türe selbst erforderlich. Dies ist insbesondere bei nachträglichem Umbau eines Fahrzeugs, beispielsweise von Versehrtenfahrzeugen, von Bedeutung.

In Weiterbildung der Erfindung sind die zweiten Anlenkmittel als wenigstens ein Schwenkbügel ausgebildet und es sind Mittel vorgesehen, um die erste Türe wahlweise mittels des Schwenkbügels schwenkbar mit der Karosseriestruktur zu verbinden oder im Bereich des Schwenkbügels freiezugeben.

Mittels eines Schwenkbügels kann die zweite Bewegungsbahn der Türe freier ausgelegt werden und dennoch kann ein stabiler, einfacher Aufbau realisiert werden.

In Weiterbildung der Erfindung ist der Schwenkbügel schwenkbar mit der Karosseriestruktur verbunden und kann mittels eines Türschlosses wahlweise an der ersten Türe angreifen.

Auch dadurch wird sichergestellt, dass gegenüber einem konventionellen Fahrzeug nur geringfügige Änderungen erforderlich sind, da die wahlweise Verbindung des Schwenkbügels mit der Karosseriestruktur über ein ohnehin vorhandenes Türschloss erfolgt. Beispielsweise wird der Schwenkbügel mittels des Türschlosses mit der Türe verrastet und die Türe wird beim Öffnen über das Türschloss und weitere Abstützflächen an Schwenkbügel und Türe gehalten.

In Weiterbildung der Erfindung kann das Türschloss der ersten Türe an einer Schließöse angreifen, die mittels des arretierbaren Schwenkbügels schwenkbar mit der Karosseriestruktur verbunden ist.

Auch diese Maßnahme verringert die erforderlichen Änderungen gegenüber konventionellen Fahrzeugen, da die Türe mittels der ohnehin vorhandenen Schließöse mit dem Schwenkbügel verbunden wird. Der Schwenkbügel oder die Schließöse kann im Normalbetrieb unmittelbar am Türrahmen verriegelt sein.

In Weiterbildung der Erfindung ist die erste Türe im Bereich einer vorderen Türkante schwenkbar mit der B-Säule verbunden und ist im Bereich einer gegenüberliegenden hinteren Türkante wahlweise schwenkbar mit der Karosseriestruktur verbindbar.

Auf diese Weise wird eine konventionelle Türöffnung für maximale Sicherheit der Insassen im Normalbetrieb erreicht und beim Schwenken um die hintere Türkante kann eine maximale Türöffnung für leichtes Beladen erreicht werden. Ein Öffnungswinkel der ersten, hinteren Türe und der zweiten, vorderen Türe beträgt dann zweckmäßigerweise wenigstens 90°.

In Weiterbildung der Erfindung sind Mittel zum gesteuerten Verbinden der zweiten Anlenkmittel mit der ersten Türe oder der Karosseriestruktur und zum nachfolgenden Lösen der B-Säule von der Karosseriestruktur vorgesehen.

Beispielsweise kann auf Anforderung eines Fahrers ein gesteuertes, aufeinanderfolgendes Entriegeln der B-Säule von der übrigen Karosseriestruktur, das Verriegeln des Türschlosses an der Schließöse sowie das Freigeben des Schwenkbügels erfolgen.

In Weiterbildung der Erfindung ist die B-Säule einerseits mit einem Dachrahmen und andererseits mit einem Schweller mittels Zugstangen, Druckstangen und/oder Fanghaken verbindbar.

Auf diese Weise wird eine stabile, einfache Konstruktion, beispielsweise ähnlich einer Cabriodachverriegelung, erreicht.

Das der Erfindung zugrundeliegende Problem wird auch durch ein Kraftfahrzeug mit einer erfindungsgemäßen Kraftfahrzeugkarosserie gelöst.

Weitere Merkmale und Vorteile der Erfindung ergeben sich aus den Ansprüchen und der folgenden Beschreibung einer bevorzugten Ausführungsform im Zusammenhang mit den Zeichnungen. In den Zeichnungen zeigen:
- Fig. 1A, 1B und 1C: perspektivische Ansichten eines Abschnitts einer erfindungsgemäßen Kraftfahrzeugkarosserie bei normaler Türöffnung,
- Fig. 2A und 2B: Schnittansichten der Kraftfahrzeugkarosserie der Fig. 1A bis 1C bei normaler Türöffnung,
- Fig. 3A, 3B und 3C: Ansichten der Kraftfahrzeugkarosserie der Fig. 1A, 1B und 1C beim Öffnen der Türen für eine maximale Türöffnung,
- Fig. 4A und 4B: Schnittansichten der Kraftfahrzeugkarosserie der Fig. 1A, 1B und 1C beim Öffnen der Türen für eine maximale Türöffnung,
- Fig. 5: eine schematische Darstellung einer lösbaren Karosserie-B-Säule gemäß der Erfindung und
- Fig. 6: eine schematische Darstellung einer Steuerungsvorrichtung für die erfindungsgemäße Kraftfahrzeugkarosserie.

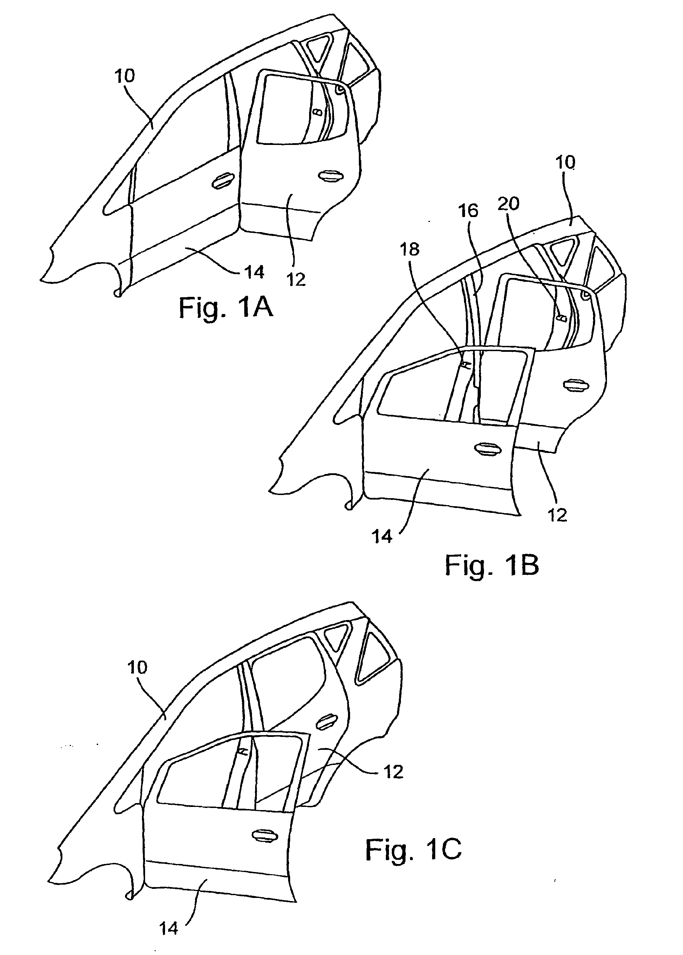

In den Darstellungen der Fig. 1A, 1B und 1C ist ein Seitenteil 10 einer erfindungsgemäßen Kraftfahrzeugkarosserie mit einer ersten, hinteren Türe 12, einer zweiten, vorderen Türe 14 und einer lösbaren B-Säule 16 gezeigt. Die vordere Türe 14 ist mittels konventioneller Türscharniere an dem Seitenteil 10 im Bereich einer A-Säule angeschlagen und ein Türschloss der vorderen Türe 14 greift in eine Schließöse 18 an der B-Säule 16 ein. Die hintere Türe 12 ist in an und für sich konventioneller Weise mittels zweier Türscharniere an der B-Säule 16 angeschlagen und öffnet sich infolgedessen, wie die vordere Türe 14, entgegen der Vorwärts-Fahrtrichtung. Eine solche Öffnung entgegen der Fahrtrichtung hat im Fahrbetrieb beispielsweise den Vorteil, dass die Türen 12, 14 durch den Fahrtwind geschlossen werden und infolgedessen nicht unvermutet aufspringen können. Das Türschloss der hinteren Türe 12 greift in eine Schließöse 20 ein, die im Bereich einer C-Säule des Seitenteils 10 angeordnet ist.

Wie den Fig. 1A, 1B und 1C zu entnehmen ist, erfolgt ein Öffnen der Türen im dargestellten Normalbetrieb in gänzlich konventioneller Weise und ein Öffnen der vorderen Türe 14 und der hinteren Türe 12 ist unabhängig voneinander möglich. Durch die B-Säule 16 wird der Dachrahmen des Seitenteils 10 gegen den Schwellerbereich abgestützt und infolgedessen weist die Kraftfahrzeugkarosserie eine gegenüber konventionellen Karosserien unverminderte Steifigkeit auf und bietet im Aufprallfall Schutz. Beispielsweise kann auch ein Sicherheitsgurt an der B-Säule 16 befestigt werden.

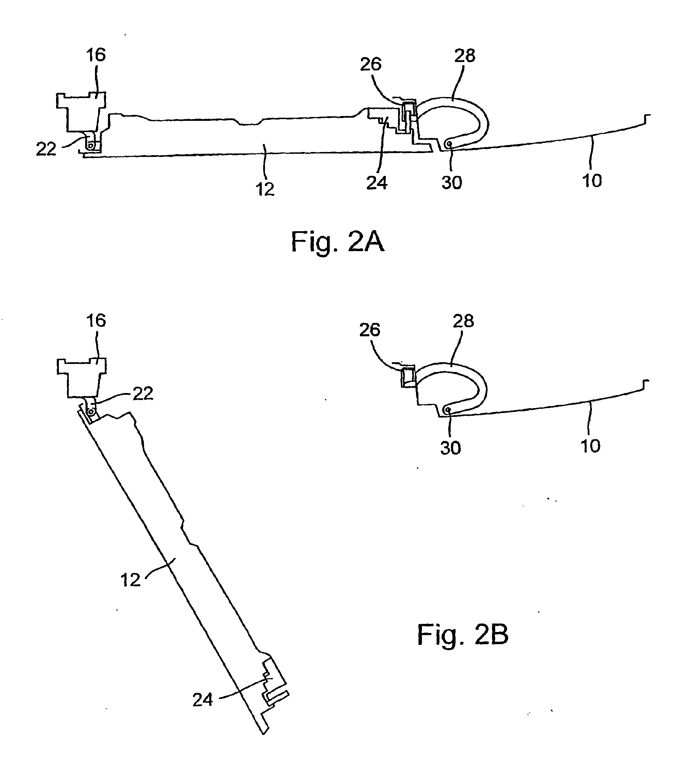

In den Schnittansichten der Fig. 2A und 2B ist jeweils die B-Säule 16 sowie die hinter Türe 12 und ein hinterer Kotflügel des Seitenteils 10 zu erkennen. Wie bereits ausgeführt wurde, ist die hintere Türe 12 mittels konventioneller Türscharniere 22 an der B-Säule 16 angelenkt. Ein Türschloss 24 der hinteren Türe 12 greift in bekannter Art und Weise an einer Schließöse 26 an, die an der Hinterkante des Türrahmens im Seitenteil 10 angeordnet ist. Die Schließöse 26 ist mit einem Schwenkbügel 28 verbunden, der seinerseits an einem Anlenkpunkt 30 schwenkbar mit dem Seitenteil 10 verbunden ist. Im Fall der in den Fig. 2A und 2B dargestellten normalen Türöffnung ist die Schließöse 26 und/oder der Schwenkbügel 28 verriegelt, so dass keine Relativbewegung zwischen der Hinterkante des Türrahmens des Seitenteils 10 und der Schließöse 26 auftreten kann. Infolgedessen wird die Türe 12 in der geschlossenen Stellung gemäß der Fig. 2A sicher an dem Seitenteil 10 gehalten. Da auch die B-Säule 16 in dem dargestellten Normalbetrieb sicher mit dem Seitenteil 10 verbunden und beispielsweise verriegelt ist, verhält sich die erfindungsgemäße Kraftfahrzeugkarosserie bei einem Fahrzeugaufprall in gleicher Weise wie eine konventionelle Kraftfahrzeugkarosserie ohne lösbare B-Säule.

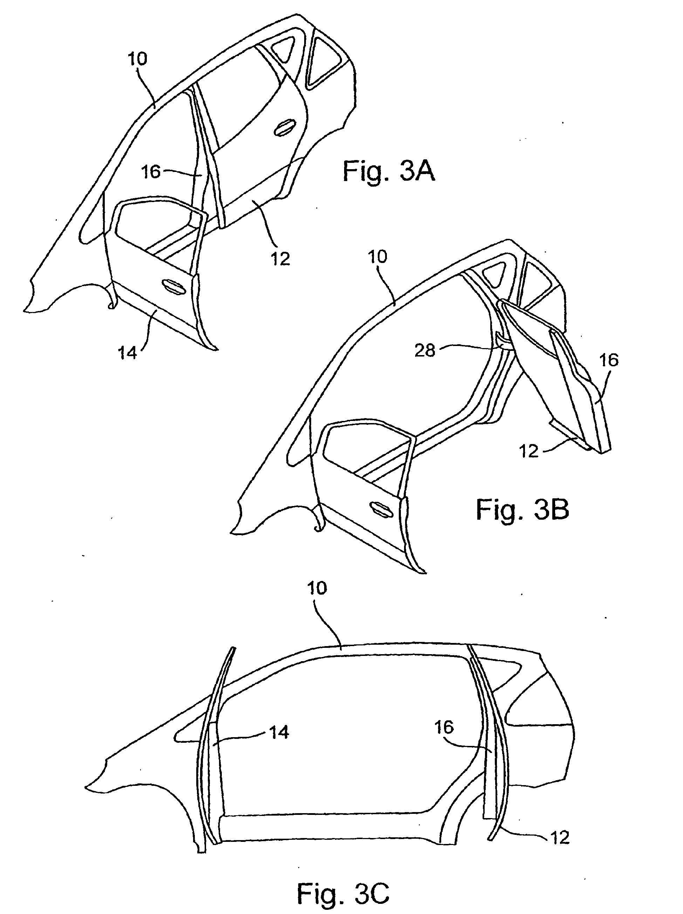

Die Ansichten der Fig. 3A, 3B und 3C zeigen das Seitenteil 10 mit den Türen 12 und 14 sowie der B-Säule 16 der Kraftfahrzeugkarosserie der Fig. 1A, 1B und 1C bei einem Öffnen der Türen 12 und 14 für eine maximale Türöffnung.

Wie in der Fig. 3A zu erkennen ist, wird zunächst die vordere Türe 14 bis zu einem Öffnungswinkel von etwa 90° geöffnet. Nachfolgend werden die Verriegelungen der B-Säule 16 am Schweller und am Dachrahmen des Seitenteils 10 freigegeben, vorausgesetzt, dass das Türschloss der hinteren Türe 12 mit der Schließöse verriegelt ist. Daraufhin kann die Verriegelung der Schließöse und/oder des Schwenkbügels am Seitenteil 10 freigegeben werden, so dass, wie in der Fig. 3B zu erkennen ist, die hintere Türe 12 zusammen mit der B-Säule 16 mittels des Schwenkbügels 28 um die C-Säule des Seitenteils 10 geschwenkt werden kann. Die B-Säule 16 ist dabei mittels der konventionellen Türscharniere an der Türe 12 gehalten.

Wie der Seitenansicht der Fig. 3C zu entnehmen ist, kann auch die hintere Türe 12 mittels des Schwenkbügels 28 um einen Winkel von 90° geöffnet werden, so dass für das Einladen sperriger Gegenstände oder beispielsweise einen Ausbau der Sitze die gesamte, maximale Türöffnung im Seitenteil 10 zur Verfügung steht, ohne dass die B-Säule 16 einen Beladungsvorgang behindern könnte.

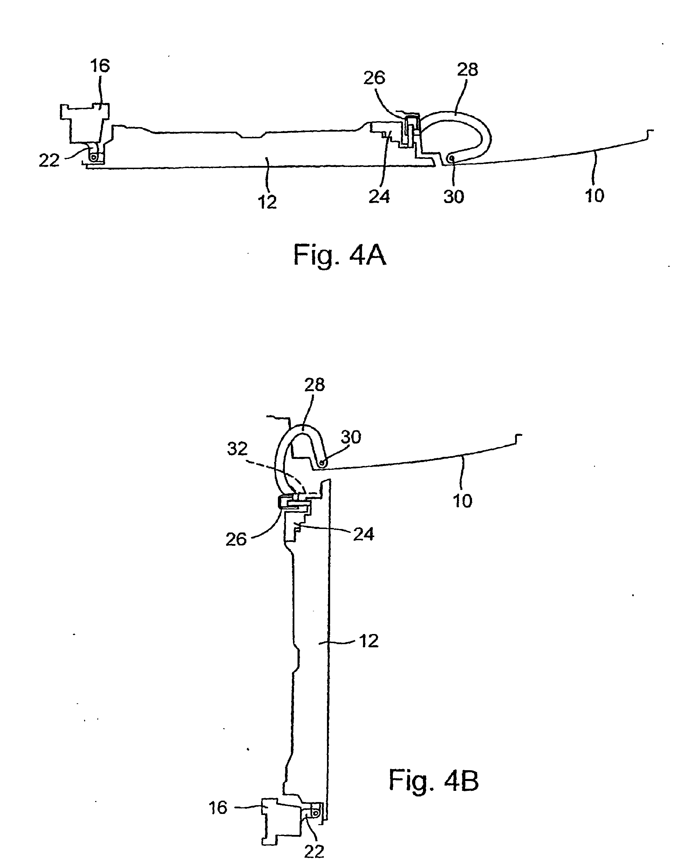

Analog zu den Schnittansichten der Fig. 2A und 2B zeigen die Schnittansichten der Fig. 4A und 4B die B-Säule 16, die hintere Türe 12 sowie den hinteren Kotflügel des Seitenteils 10 bei einem Öffnen der hinteren Türe 12 für eine maximale Türöffnung entgegen der normalen Vorwärtsfahrrichtung des Kraftfahrzeugs.

Die Schnittansicht der Fig. 4A zeigt dabei den geschlossenen Zustand der hinteren Türe 12, der bereits in der Fig. 2A dargestellt wurde. Ausgehend vom Zustand der Fig. 4A muss zunächst die vordere Türe geöffnet werden, daraufhin können die Verrieglungen der B-Säule 16 am Seitenteil 10 gelöst werden und eine Verriegelung der Schließöse 26 und/oder des Schwenkbügels 28 am Seitenteil 10 wird gelöst. Die Verriegelungen der B-Säule 16 dürfen dabei nur dann gelöst werden, wenn das Türschloss 24 der hinteren Türe 12 in die Schließöse 26 eingerastet ist.

Daraufhin kann die hintere Türe 12 um den Anlenkpunkt 30 des Schwenkbügels 28 bis zu einem Öffnungswinkel von etwa 90° verschwenkt werden. Wie bereits ausgeführt wurde, wird die B-Säule 16 dabei mittels der konventionellen Türscharniere 22 an der Türe 12 gehalten. Neben der Befestigung der hinteren Türe 12 am Schwenkbügel 28 mittels des Türschlosses 24 und der Schließöse 26 können weitere, in der Fig. 4A lediglich gestrichelt angedeutete Abstützelemente 32 vorgesehen sein, um die hintere Türe 12 beim Öffnen sicher am Schwenkbügel 28 zu halten.

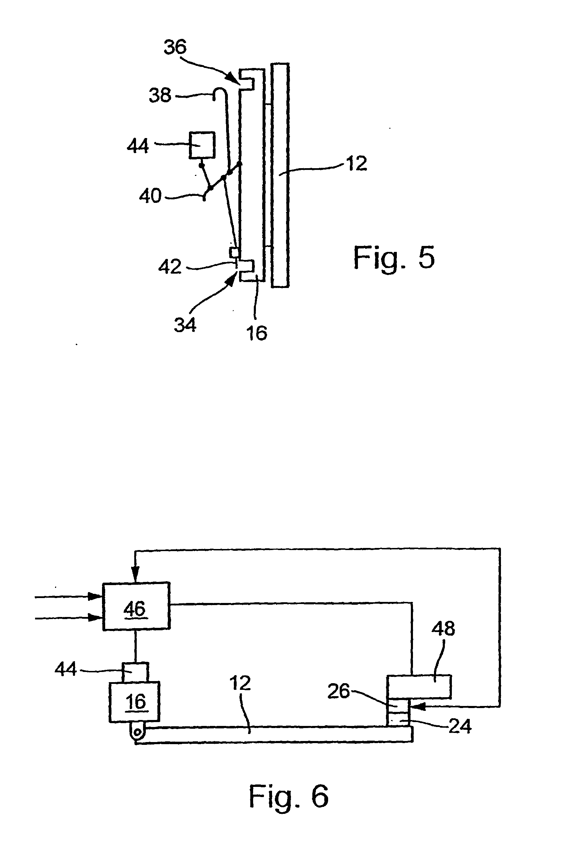

In der schematischen Darstellung der Fig. 5 ist die B-Säule 16 sowie die hintere Türe 12 dargestellt. Die B-Säule 16 weist Ausnehmungen 34 und 36 auf, die auf passende Vorsprünge an dem Seitenteil der Kraftfahrzeugkarosserie aufgeschoben werden können und für einen sicheren Halt der B-Säule 16 am Seitenteil sorgen. Zur Verriegelung der B-Säule 16 am Seitenteil ist im Bereich der oberen Ausnehmung 36 ein Fanghaken 38 vorgesehen, der in eine passende Öffnung am Seitenteil 10 eingreifen kann. Der Fanghaken 38 ist mittels einer Zugstange mit einem Hebel 40 verbunden. Durch Betätigung des Hebels 40 kann, ähnlich der Verriegelung eines Cabriodachs, der Fanghaken 38 und somit die B-Säule 16 gegen das Seitenteil verspannt werden. Im Bereich der unteren Ausnehmung 34 der B-Säule 16 ist ein Riegel 42 vorgesehen, der mittels einer Betätigungsstange ebenfalls mit dem Hebel 40 verbunden ist. Bei Betätigung des Hebels 40 wird somit einerseits der Fanghaken 38 in der Fig. 5 nach unten gezogen und gleichzeitig wird der Riegel 42 nach unten geschoben. Mittels des Riegels 42 und des Fanghakens 38 kann die B-Säule 16 somit sicher an dem Seitenteil verankert werden. Die Betätigung des Hebels 40 kann entweder manuell oder mittels einer elektrisch aktivierbaren Einrichtung erfolgen, beispielsweise einem Hubmagneten 44.

In der schematischen Darstellung der Fig. 6 ist eine Steuerung dargestellt, um die für die alternativen Bewegungsbahnen der hinteren Türe 12 vorzunehmenden Ent- bzw. Verriegelungsvorgänge kontrolliert auszulösen. Eine zentrale Steuereinheit 46 enthält als Eingangssignale einen Befehl, das Öffnen der hinteren Türe 12 für eine maximale Türöffnung vorzubereiten. Ein solcher Befehl kann beispielsweise von einem Fahrer ausgelöst werden. Weiterhin erhält die Steuereinheit 46 Eingangssignale über den Fahrzustand des Fahrzeugs. Beispielsweise kann die Entriegelung der B-Säule 16 nur dann erfolgen, wenn das Fahrzeug steht und die Zündung ausgeschaltet ist. Die Steuereinheit 46 erhält darüber hinaus ein Eingangssignal, ob das Türschloss 24 der hinteren Türe 12 sicher mit der Schließöse 26 am Seitenteil verrastet ist.

Sind die erforderlichen Randbedingungen für das Öffnen der hinteren Türe 12 für eine maximale Türöffnung gegeben, gibt die Steuereinheit 46 zunächst einen Befehl an den Hubmagneten 44 auf, der daraufhin, wie schematisch in der Fig. 5 dargestellt wurde, die Verriegelungen der B-Säule 16 an dem Seitenteil der Kraftfahrzeugkarosserie löst. Gleichzeitig kann die Steuereinheit 46 die Verriegelung des in den Fig. 4A und 4B dargestellten Schwenkbügels 28 und/oder der Schließöse 26 mit der Kraftfahrzeugkarosserie lösen. Nach Lösen der Verriegelungen der B-Säule 16 und des Schwenkbügels und/oder der Schließöse 26 kann die hintere Türe 12 dann um den Schwenkbügel nach hinten geöffnet werden, wie in der Fig. 3B dargestellt ist. Die Steuereinheit 46 blockiert zweckmäßigerweise die Verriegelung des Türschlosses 24 mit der Schließöse 26 sobald die Verriegelungen der B-Säule mit dem Seitenteil der Kraftfahrzeugkarosserie gelöst sind. Auf diese Weise kann verhindert werden, dass die hintere Türe 12 versehentlich durch Betätigen eines Türgriffe von der Schließöse 26 und dem Schwenkbügel gelöst wird.

Nachdem die Türe 12 wieder geschlossen ist und die B-Säule 16 an der vorgesehenen Position zwischen Dachrahmen und Schweller des Seitenteils angeordnet ist, sorgt die Steuereinheit 46 auf einen entsprechenden Anforderungsbefehl hin für die Verriegelung der B-Säule 16 an dem Seitenteil und die Verriegelung des Schwenkbügels und/oder der Schließöse 26 am Türrahmen des Seitenteils. Hiernach kann die Sperre des Türschlosses 24 aufgehoben werden und die hintere Türe 12 kann wieder in normaler, konventioneller Weise geöffnet werden. Gleichzeitig kann beispielsweise die Zündung des Kraftfahrzeugs wieder für den Fahrbetrieb freigegeben werden.

## Patentansprüche

1. Kraftfahrzeugkarosserie mit wenigstens zwei an einer Fahrzeugseite angeordneten Türen (12, 14) und einer Karosserie-B-Säule (16), die in einer karosseriefesten Position an der Fahrzeugseite zwischen den beiden Türen (12, 14) angeordnet ist, wobei eine erste der beiden Türen (12, 14) wahlweise mittels erster Anlenkmittel (22) folgend einer ersten Bewegungsbahn oder mittels zweiter Anlenkmittel (28) folgend einer zweiten Bewegungsbahn geöffnet werden kann, wobei die ersten Anlenkmittel (22) zum schwenkbaren Anlenken der ersten Türe (12) an der B-Säule (16) vorgesehen sind und die zweiten Anlenkmittel (28) zum schwenkbaren Anlenken der ersten Türe (12) an wenigstens einem von der B-Säule (16) verschiedenen Punkt der Karosserie vorgesehen sind,
**dadurch gekennzeichnet, dass**
die Karosserie-B-Säule (16) lösbar ist und im gelösten Zustand zusammen mit der ersten Türe (12) verschwenkbar ist.

2. Kraftfahrzeugkarosserie nach Anspruch 1,
**dadurch gekennzeichnet, dass**
die ersten Anlenkmittel als wenigstens ein Türscharnier (22) ausgebildet sind, das die erste Türe (12) mit der B-Säule (16) verbindet.

3. Kraftfahrzeugkarosserie nach Anspruch 1 oder 2
**dadurch gekennzeichnet, dass**
die zweiten Anlenkmittel als wenigstens ein Schwenkbügel (28) ausgebildet sind und Mittel (24, 26) vorgesehen sind, um die erste Türe (12) wahlweise mittels des Schwenkbügels (28) schwenkbar mit der Karosseriestruktur (10) zu verbinden oder im Bereich des Schwenkbügels freizugeben.

4. Kraftfahrzeugkarosserie nach Anspruch 3,
**dadurch gekennzeichnet, dass**
der Schwenkbügel (28) schwenkbar mit der Karosseriestruktur (10) verbunden ist und mittels eines Türschlosses (24) wahlweise an der ersten Türe (12) angreifen kann.

5. Kraftfahrzeugkarosserie nach Anspruch 4,
**dadurch gekennzeichnet, dass**
das Türschloss (24) der ersten Türe (12) an einer Schließöse (26) angreifen kann, die mittels des arretierbaren Schwenkbügels (28) schwenkbar mit der Karosseriestruktur (10) verbunden ist.

6. Kraftfahrzeugkarosserie nach einem der vorstehenden Ansprüche,
**dadurch gekennzeichnet, dass**
die erste Türe (12) im Bereich einer vorderen Türkante schwenkbar mit der B-Säule (16) verbunden ist und im Bereich einer gegenüberliegenden hinteren Türkante wahlweise schwenkbar mit der Karosseriestruktur (10) verbindbar ist.

7. Kraftfahrzeugkarosserie nach einem der vorstehenden Ansprüche
**dadurch gekennzeichnet, dass**
Mittel (44, 46, 48) zum gesteuerten Verbinden der zweiten Anlenkmittel (28) mit der ersten Türe (12) oder der Karosseriestruktur und zum nachfolgenden Lösen der B-Säule (16) von der Karosseriestruktur (10) vorgesehen sind.

8. Kraftfahrzeugkarosserie nach einem der vorstehenden Ansprüche
**dadurch gekennzeichnet, dass**
die B-Säule (16) einerseits mit einem Dachrahmen und andererseits mit einem Schweller mittels Zugstangen, Druckstangen und/oder Fanghaken (38) verbindbar ist.

9. Kraftfahrzeug
**gekennzeichnet durch**
eine Kraftfahrzeugkarosserie nach einem der vorstehenden Ansprüche.

## Claims

1. Motor vehicle body having at least two doors (12, 14), which are arranged on one side of the vehicle, and a body B-column (16), which is arranged between the two doors (12, 14) on the side of the vehicle in a position fixed on the body, it being possible for a first of the two doors (12, 14) to be opened either by means of first articulation means (22) along a first trajectory or by means of second articulation means (28) along a second trajectory, the first articulation means (22) for the pivotable articulation of the first door (12) being provided on the B-column (16) and the second articulation means (28) for the pivotable articulation of the first door (12) being provided on at least one point of the body that is different from the B-column (16), **characterized in that** the body B-column (16) is releasable and, in the released state, is pivotable together with the first door (12).

2. Motor vehicle body according to Claim 1, **characterized in that** the first articulation means are designed as at least one door hinge (22) which connects the first door (12) to the B-column (16) .

3. Motor vehicle body according to Claim 1 or 2, **characterized in that** the second articulation means are designed as at least one pivoting clip (28) and means (24, 26) are provided in order either to connect the first door (12) pivotably to the body structure (10) by means of the pivoting clip (28) or to open it up in the region of the pivoting clip.

4. Motor vehicle body according to Claim 3, **characterized in that** the pivoting clip (28) is connected pivotably to the body structure (10) and, by means of a door lock (24), can optionally act on the first door (12) .

5. Motor vehicle body according to Claim 4, **characterized in that** the door lock (24) of the first door (12) can act on a locking eye (26) which is connected pivotably to the body structure (10) by means of the lockable pivoting clip (28).

6. Motor vehicle body according to one of the preceding claims, **characterized in that** the first door (12) is connected pivotably to the B-column (16) in the region of a front door edge and can optionally be connected pivotably to the body structure (10) in the region of an opposite, rear door edge.

7. Motor vehicle body according to one of the preceding claims, **characterized in that** means (44, 46, 48) are provided for the controlled connection of the second articulation means (28) to the first door (12) or the body structure and for the subsequent release of the B-column (16) from the body structure (10) .

8. Motor vehicle body according to one of the preceding claims, **characterized in that** the B-column (16) can be connected, on the one hand, to a roof frame and, on the other hand, to a sill by means of tension rods, compression rods and/or intercepting hooks (38).

9. Motor vehicle, **characterized by** a motor vehicle body according to one of the preceding claims.

## Revendications

1. Carrosserie de véhicule automobile comprenant au moins deux portières (12, 14) disposées sur un côté de véhicule et une colonne B de carrosserie (16) disposée dans une position solidaire de la carrosserie sur le côté de véhicule entre les deux portières (12, 14), dans laquelle une première des deux portières (12, 14) peut être ouverte soit au moyen de premiers moyens d'articulation (22) suivant une première trajectoire soit au moyen de deuxièmes moyens d'articulation (28) suivant une deuxième trajectoire, les premiers moyens d'articulation (22) étant prévus sur la colonne B (16) pour l'articulation pivotante de la première portière (12), et les deuxièmes moyens d'articulation (28) étant prévus au niveau d'un point de la carrosserie différent de la colonne B (16) pour l'articulation pivotante de la première portière (12), **caractérisée en ce que** la colonne B de carrosserie (16) est déblocable et pivotante, à l'état débloqué, conjointement avec la première portière (12) .

2. Carrosserie de véhicule automobile selon la revendication 1, **caractérisée en ce que** les premiers moyens d'articulation présentent la forme d'au moins une charnière de portière (22) qui relie la première portière (12) à la colonne B (16).

3. Carrosserie de véhicule automobile selon la revendication 1 ou 2, **caractérisée en ce que** les deuxièmes moyens d'articulation présentent la forme d'au moins un arceau pivotant (28), et des moyens (24, 26) sont prévus pour au choix relier en pivotement la première portière (12) au moyen de l'arceau pivotant (28) à la structure de carrosserie (10) ou pour la débloquer dans la zone de l'arceau pivotant.

4. Carrosserie de véhicule automobile selon la revendication 3, **caractérisée en ce que** l'arceau pivotant (28) est relié en pivotement à la structure de carrosserie (10) et peut intervenir sur la première portière (12) au moyen d'une serrure de portière (24).

5. Carrosserie de véhicule automobile selon la revendication 4, **caractérisée en ce que** la serrure de portière (24) de la première portière (12) peut intervenir sur un oeillet de fermeture (26) qui est relié en pivotement à la structure de carrosserie (10) au moyen de l'arceau pivotant (28) blocable.

6. Carrosserie de véhicule automobile selon l'une quelconque des revendications précédentes, **caractérisée en ce que** la première portière (12), dans la zone d'une arête de portière avant, est reliée en pivotement à la colonne B (16) et, dans la zone d'une arête de portière arrière située en face, peut être reliée au choix en pivotement à la carrosserie de véhicule (10) .

7. Carrosserie de véhicule automobile selon l'une quelconque des revendications précédentes, **caractérisée en ce que** des moyens (44, 46, 48) sont prévus pour relier de manière commandée les deuxièmes moyens d'articulation (28) à la première portière (12) ou à la structure de carrosserie et pour ensuite débloquer la colonne B (16) de la structure de carrosserie (10).

8. Carrosserie de véhicule automobile selon l'une quelconque des revendications précédentes, **caractérisée en ce que** la colonne B (16) peut être reliée d'une part à un cadre de toit et d'autre part à un seuil de porte au moyen de tirants, de tiges de compression et/ou de crochets d'attache (38).

9. Véhicule automobile, **caractérisé par** une carrosserie de véhicule automobile selon l'une quelconque des revendications précédentes.
